(19)

Europäisches
Patentamt
European
Patent Office
Office européen
des brevets

(11) **EP 1 854 367 A2**

(12) **EUROPEAN PATENT APPLICATION**

(43) Date of publication:
**14.11.2007 Bulletin 2007/46**

(51) Int Cl.:
**A23L 1/00** *(2006.01)*  **A23L 1/164** *(2006.01)*
**A23P 1/12** *(2006.01)*  **A23L 1/0522** *(2006.01)*

(21) Application number: **07008009.8**

(22) Date of filing: **19.04.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **09.05.2006 US 382442**

(71) Applicant: **Kerry Group Services International
Limited
Tralee
Co. Kerry (IE)**

(72) Inventors:
• **Milne, Jeffrey J.
Lenexa
Kansas 66220 (US)**

• **Dust, Eugene Albert
Fremont
Nebraska 68025 (US)**
• **Paramita, Widya R.
New Glarus
Wisconsin 53574 (US)**
• **Umland, Gregory A.
Hudson
Illinois 61748 (US)**
• **Maegli, Jack William
Beloit
Wisconsin 53511 (US)**

(74) Representative: **UEXKÜLL & STOLBERG
Patentanwälte
Beselerstrasse 4
22607 Hamburg (DE)**

(54) **Extrusion process for the production of baby cereal**

(57)     Novel cereal products and methods of making those products are provided. The cereal products can be utilized as baby food. The methods of making these products comprise extruding ingredients including water and a pre-gelatinized starch and/or pre-gelatinized flour through an extruder barrel under low shear conditions so as to preserve the integrity of the starch or flour. The extrudate is dried and milled to the desired cereal particle size for packaging and later reconstitution with water.

Fig. 1

**EP 1 854 367 A2**

**Description**

BACKGROUND OF THE INVENTION

Field of the Invention

The present invention is broadly concerned with novel compositions and methods of extruding these compositions to cook them and form cereal products that previously had to be prepared by drum drying processes.

Description of the Prior Art

Typically, cereal products are created through a drum dryer cooking and dehydration process. This process is useful in applying sufficient thermal energy to gelatinize the starch which allows for rapid re-hydration in the subsequent reconstitution of the cereal. Mechanical shear forces are minimized to preserve the delicate integrity of the swollen starch granules.

In the drum dryer process, a thin layer of wet product is applied to a hot roller, which cooks the product and dries it into a thin film. The film is then scraped off the roller, breaking it into the characteristically small flakes in the process. These flakes are easily reconstituted in water, and the product quickly attains a desired consistency.

Another process used to manufacture cereal products is by extrusion. Extrusion cooking of cereal products is much more efficient in terms of energy usage and production rate compared to a commercial drum drying process, but it requires the use of a highpressure, short-time extrusion, which causes high shear forces to rupture the gelatinized starch granules in the cereal, leading to a sticky, cohesive consistency upon reconstitution.

There is a need for an efficient method of forming cereal products that avoids the problems inherent in prior art extrusion processes and yields cereal products that can be rehydrated to form a cereal having desired consistencies.

SUMMARY OF THE INVENTION

The present invention fills this need by broadly providing cereal products and methods of forming such products by extrusion processes.

In more detail, the cereals are formed by introducing ingredients, including respective quantities of water and a component selected from the group consisting of pre-gelatinized starch and pre-gelatinized flour, into the inlet of an extruder comprising at least one flighted, axially rotatable screw. It is preferred that the dry ingredients are blended and metered continuously into the extruder, while the other ingredients (water, fats, oils, and/or others discussed below) are added to the dry blend immediately after it enters the extruder.

As used herein, "pre-gelatinized" refers to starch and flour that has been irreversibly formed into a gel by destruction of the crystalline structure but not depolymerization of the starch or flour. The pre-gelatinized starch and flour can be purchased commercially in pre-gelatinized form, or it can be produced as part of this process (e.g., through use of a pre-conditioner prior to extrusion).

The ingredients introduced into the extruder should comprise at least about 10% by weight pre-gelatinized starch and/or flour, preferably from about 30% to about 90% by weight pre-gelatinized starch and/or flour, and even more preferably from about 50% to about 75% by weight pre-gelatinized starch and/or flour, based upon the total weight of ingredients introduced into the extruder taken as 100% by weight. Furthermore, the ingredients introduced into the extruder should have a moisture content of from about 5% to about 50% by weight, preferably from about 10% to about 40% by weight, and even more preferably from about 10% to about 25% by weight, based upon the total weight of ingredients introduced into the extruder taken as 100% by weight.

It is also preferred that the extruded ingredients include an oil and/or fat. In embodiments where an oil or fat is present, the total oil and fat content is preferably from about 0.1% to about 10% by weight, more preferably from about 0.1% to about 5% by weight, and even more preferably from about 0.5% to about 3% by weight, based upon the total weight of ingredients introduced into the extruder taken as 100% by weight. Examples of suitable oils and fats include those selected from the group consisting of canola oil, soybean oil, sunflower oil, cottonseed oil, safflower oil, and mixtures thereof.

In one embodiment, the extruded ingredients may also comprise native starches and/or native flours (i.e., those that are not pre-gelatinized). In embodiments where a native starch and/or native flour are used, the combined weight of all native starches and native flours present will be from about 0.1% to about 60% by weight, preferably from about 3% to about 40% by weight, and even more preferably from about 5% to about 30%, based upon the total weight of ingredients introduced into the extruder taken as 100% by weight. The total amount ofpre-gelatinized starches and pre-gelatinized flours present will comprise at least about 10% by weight, preferably at least about 20% by weight, more preferably at least about 30%, and even more preferably from about 60% to about 80% by weight of all flour and starch (native and pre-gelatinized) present in the ingredients to be extruded. Suitable starches and flours for use in the present invention include both pre-gelatinized and native flours and starches obtained from rice flour, wheat flour, oat, barley, and mixtures of the foregoing.

The ingredients to be extruded may also include a number of optional ingredients, including those selected from the group consisting of sugar, vitamin supplements, mineral supplements (e.g., sources of calcium, zinc, iron), flavoring agents, coloring agents, and mixtures of the foregoing. If utilized, these optional ingredients will typically comprise no more than about 10% by weight, and preferably from about 0.5% to about 5.0% by weight of the total ingredients to be extruded.

A description of a typical twin-screw extruder that could be used with the present invention can be found in U.S. Patent No. 6,045,851 to Cross, incorporated by reference herein. The screw(s) used in the present invention is preferably designed to present a minimal amount of shear in order to minimize, and preferably avoid, degradation of the starches and flours. The screw(s) is rotated at a speed of less than about 500 rpm, preferably less than about 450 rpm, more preferably less than about 350 rpm, and even more preferably from about 100 to about 400 rpm, in order to advance the ingredients through the extruder barrel.

The Specific Mechanical Energy (SME) provides a relational measurement of the shear experienced by the ingredients as they pass through the extruder barrel. That is, the SME is directly proportional to the shear experienced by the ingredients in the extruder barrel. SME is calculated according to the formula

$$\text{Specific Mechanical Energy (SME)} = \frac{\left[ \dfrac{\text{rpm (actual)}}{\text{rpm (maximum)}} \text{ x motor load } \text{ x kW of motor} \right]}{\text{feed rate in kg/hr}} .$$

In the inventive method, the SME experienced by the ingredients in the extruder barrel is preferably less than about 0.100 kW/kg/hr, more preferably less than about 0.090 kW/kg/hr, even more preferably less than about 0.080 kW/kg/hr, and yet even more preferably from about 0.045 to about 0.070 kW/kg/hr.

The temperature of the ingredients in the extruder barrel is preferably from about 21 °C to about 177°C, more preferably from about 50°C to about 150°C, and even more preferably from about 70°C to about 120°C. The retention time of the ingredients in the barrel should be from about 9 to about 17 seconds, and more preferably from about 12 to about 14 seconds. The ingredients should be advanced through the barrel at a rate of from about 70 to about 140 lbs/hr, and more preferably from about 95 to about 105 lbs/hr.

Upon advancing through the extruder barrel, the ingredients will exit through an extrusion die (such as a shape-forming die) positioned at the extruder outlet, thus forming an extrudate. The pressure that develops immediately before the die should be from about 100 to about 1,500 psi, preferably from about 150 to about 1,300 psi, and more preferably from about 400 to about 1,200 psi.

Upon exiting the extruder, the extrudate will expand due to the drop in pressure and the release of water from the extrudate in the form of steam. A rotary knife assembly is preferably used to cut the extrudate, which can then be dried and milled (before, after, or simultaneous to drying).

Preferred drying processes include those that expose the extrudate to air having a temperature of from about 70°C to about 100°C preferably from about 78°C to about 95 °C, and even more preferably from about 83 °C to about 90°C. Preferably, the extrudate is exposed to air having the above temperatures for a time period of from about 5 to about 35 minutes, more preferably from about 10 to about 30 minutes, and even more preferably from about 15 to about 25 minutes. The dried product will have a typical moisture content at this stage of from about 0.5% to about 12% by weight, preferably from about 2% to about 8% by weight, and even more preferably from about 2-6% by weight, based upon the total weight of the dried product taken as 100% by weight. Furthermore, the bulk density of the dried product will be from about 50 to about 500 g/L, preferably from about 75 to about 200 g/L, and even more preferably from about 110 to about 160 g/L.

Preferred milling processes include any that can achieve the desired particle sizes of at least about 90%, preferably at least about 95%, and even more preferably about 100%, through a USS 8, and preferably through a USS 12. One such milling process involves milling the extrudate through a hammermill operating at a speed of from about 3,000 to about 4,000 rpm, having a hammer tip speed of from about 2,500 to about 3,000 m/sec, and a screen size of 1B (e.g., hole diameters of about 1.0 to about 1.5 mm) to 3A (e.g., hole diameters of from about 4.5 to about 5.0 mm). Furthermore, the bulk density of the milled and dried product will be from about 225 to about 525 g/L, preferably from about 250 to about 500 g/L, and even more preferably from about 280 to about 450 g/L. T h e dried, milled product can then be enrobed with one or more optional additives, depending upon the desired final use. These additives can be used to flavor the product and/or to form a hydrophobic or emulsifier surface coating. Examples of such additives include those selected from the group consisting of oils, flavors, sweeteners, juices or purees, emulsifiers, vitamins, minerals, particulates (e.g., fruit pieces, nuts, vegetable pieces), and mixtures of the foregoing. The level of additive will depend upon the additive and the function thereof, but typical levels are from about 0.5% to about 25% by weight, preferably from about 0.5% to about 15% by weight, and even more preferably from about 0.5% to about 10% by weight, based upon the total weight of the dried, milled product taken as 100% by weight.

Advantageously, the dried, milled product (regardless of whether the product has been enrobed) can be rehydrated with water to yield a product having a viscosity, taste, and texture similar to that of prior art, drum dried products. The dried, milled product is preferably rehydrated by adding water at a weight ratio of water:dried product (including coating weight, if applicable) of from about 2:1 to about 6:1, and more preferably from about 3:1 to about 4:1.

Upon stirring to obtain a substantially homogeneous mixture (from about 15 to about 25 revolutions), the mixture should be allowed to sit for a time period of from about 30-90 seconds, and preferably about 60 seconds, after which it will have the consistency of mashed potatoes. That is, the mixture will have a viscosity of from about 20 to about 700 Pa•s (pascal-second), preferably from about 30 to about 550 Pa•s, and even more preferably from about 50 to about 450 Pa•s, as measured using a rheometer (e.g., Brookfield R/S Rheometer, Vane spindle #V40-20; Brookfield LV3).

BRIEF DESCRIPTION OF THE DRAWING FIGURES

Figure 1 is a graph comparing the viscosities of a prior art extruded rice cereal, a prior art drum dried rice cereal, and a rice cereal made according to the inventive method; and
Fig. 2 is a graph comparing the viscosities of a prior art extruded wheat cereal, a prior art drum dried wheat cereal, and a wheat cereal made according to the inventive method.

DETAILED DESCRIPTION OF THE PREFERRED EMBODIMENTS EXAMPLES

The following examples set forth preferred methods in accordance with the invention. It is to be understood, however, that these examples are provided by way of illustration and nothing therein should be taken as a limitation upon the overall scope of the invention.

EXAMPLE 1

Preparation of Rice-Based Cereal

In this example, rice-based, pre-gelatinized flour was used in an extrusion process to create a cereal product. In a Wenger Blender, a 50 kg batch of dry (ingredients other than water; as used herein, oil may be included in the dry ingredients) ingredients was blended for 5 minutes. The percentages by weight of the dry ingredients in the cereal are set forth in Table 1.

Table 1

| INGREDIENTS | % BY WT.[A] |
|---|---|
| Long Grain White Rice Flour | 28.50% |
| Pre-gelatinized Long Grain White Rice Flour | 69.00% |
| Mineral Pre-Mix[B] | 2.00% |
| Canola Oil | 0.50% |
| [A] Based upon the total weight of all ingredients other than water taken as 100% by weight. [B] The mineral pre-mix is for nutritional supplementation and may include dicalcium phosphate, tricalcium phosphate, zinc oxide, and ferrous fumarate. | |

For the extrusion process, a Wenger Model TX52,25:1L/D extruder was used with the screw configuration set forth in Table 2.

Table 2

| PART NO. | DESCRIPTION | NUMBER USED | CUMULATIVE UNITS (L/D) | SHEARLOCK ORIENTATION |
|---|---|---|---|---|
| 55325-003 | 3/4p Feed Screw | 4 | 6 | |
| 55325-103 | 3/4p Feed Screw | 1 | 7 | |
| 55324-101 | 1u. Shearlock | 1 | 7.167 | 0° |
| 55324-103 | 1u. Shearlock | 1 | 7.333 | 45° |
| 55324-105 | 1u. Shearlock | 1 | 7.500 | 90° |
| 55325-003 | 3/4p Feed Screw | 9 | 21 | |
| 55325-103 | 3/4p Feed Screw | 1 | 22 | |
| 55364-101 | 3/4u. Shearlock | 1 | 22.125 | 0° |
| 55364-105 | 3/4u. Shearlock | 1 | 22.250 | 30° |
| 55325-103 | 3/4p Feed Screw | 1 | 23.250 | |
| 55364-101 | 3/4u. Shearlock | 1 | 23.375 | 0° |
| 55364-105 | 3/4u. Shearlock | 1 | 23.500 | 30° |
| 55321-005 | 3/4p Uncut Cone | 1 | 25 | |

The batch of dry ingredients was metered continuously into the extruder at a rate of 63.6 kg/hr. Immediately after the batch entered the extruder, water was added at a rate of 6.64 kg/hr, and vegetable oil was added at a rate of 0.182 kg/hr. To ensure that the extrudate was exposed to as little shear as possible, the screws were rotated at 260 rpm. During the conveyance through the extruder, the dough reached a temperature of 68°C, and the die pressure was 500 psi. The SME experienced by the ingredients while in the extruder was 0.06 kW/kg/hr.

After exiting the extruder, the dough was cut by a rotary knife, then dried and milled. For the drying process, the cut extrudate was conveyed through a Wenger Series IV Model 4800 gas-fired, two-pass belt dryer with an inlet air temperature of 87.8°C and a residence time of 20 minutes. After the extrudate had been dried, it was milled using a Fitzmill Model D hammermill operating at 3,480 RPM with a hammer tip speed of 2,845 m/sec and a screen size of 3A (4.75 mm diameter round hole). Table 3 sets forth the preferred particle size distribution of the resulting particles.

Table 3

| SIEVE | % RETAINED[A] |
|---|---|
| USS 14 | 2.0% |
| USS 20 | 12.0% |
| USS 40 | 36.0% |
| USS 60 | 25.0% |
| USS 80 | 14.0% |
| Pan | 11.0% |
| [A] Based upon the total percent retained taken as 100%. | |

Next, the particles were fed into a coating system and enrober reel where they were sprayed with the mixture set forth in Table 4 to impart flavoring in, and texture on, the particles.

Table 4

| INGREDIENT | % BY WT.[A] |
|---|---|
| High Oleic Canola Oil | 61.3% |
| Soy Lecithin | 30.7% |
| Vitamin Blend | 8.0% |
| [A] Using 2% by weight of the milled particles as the basis for the percentages by weight. | |

After enrobing, the final product was analyzed for reconstituted texture by adding 10 g of product to 30 g ambient water in a 100 ml beaker. This mixture was stirred for approximately 20 revolutions and then allowed to set for 1 minute. The resulting texture resembled the consistency of mashed potatoes.

EXAMPLE 2

Viscosity Measurements of Rice-Based Cereal

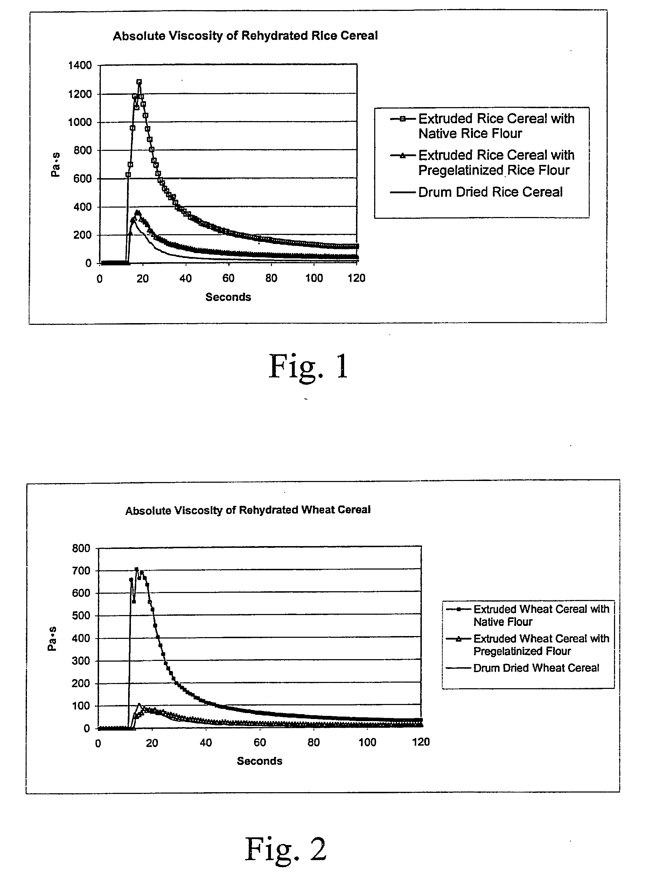

To quantitatively determine the texture and quality of the cereal product created in Example 1, the absolute viscosity was measured. First, the cereal product was rehydrated by mixing 30 g of the dry milled cereal from Example 1 with 150 g of water at ambient temperature in a 250 ml beaker until dissolved. Using a Brookfield R/S Rheometer, Vane Spindle V40 mm-20mm, and Rheo V2.7 Software, measurements for absolute viscosity were obtained as shown in Fig. 1.
For comparison, the absolute viscosity of a commercially available, drum dried rice cereal and extruded rice cereal with only native flour, both in rehydrated form, were measured. The extruded rice cereal with native rice flour was produced by following the procedure from Example 1, but using the following dry ingredients set forth below in Table 5.

Table 5

| INGREDIENTS | % BY WT.[A] |
|---|---|
| Long Grain White Rice Flour | 97.50% |
| Dicalcium Phosphate | 0.80% |
| Tricalcium Phosphate | 1.20% |
| Canola Oil | 0.50% |
| [A] Based upon the total weight of all ingredients other than water taken as 100% by weight. | |

By comparing the peak viscosities of the extruded cereal made with pre-gelatinized flour to that of the traditional, drum dried cereal, Fig. 1 shows that the texture of the extruded cereal made with pre-gelatinized flour was comparable to the texture of the traditional, drum dried cereal. In contrast, the extruded cereal with native flour had a peak viscosity three times that of the other two cereal products.

EXAMPLE 3

Preparation of Wheat-Based Cereal

In this example, wheat-based, pre-gelatinized flour was used in an extrusion process to create a cereal product. The percentages by weight of the dry ingredients in the cereal are set forth in Table 6.

Table 6

| INGREDIENTS | % BY WT.[A] |
|---|---|
| 52 Ash Soft Wheat Flour | 5.68% |

(continued)

| INGREDIENTS | % BY WT.[A] |
|---|---|
| Pre-gelatinized Whole Soft Wheat Flour | 76.44% |
| Sugar | 15.86% |
| Tricalcium Phosphate | 0.32% |
| Canola Oil | 1.50% |
| Dicalcium Phosphate | 0.20% |
| [A] Based upon the total weight of all ingredients other than water taken as 100% by weight. | |

For the extrusion process, a Wenger Model TX52, 25:1L/D extruder was used with the screw configuration set forth in Table 7.

Table 7

| PART NO. | DESCRIPTION | NUMBER USED | CUMULATIVE UNITS (L/D) | SHEARLOCK ORIENTATION |
|---|---|---|---|---|
| 55325-003 | 3/4p Feed Screw | 4 | 6 | |
| 55325-103 | 3/4p Feed Screw | 1 | 7 | |
| 55324-101 | 1u. Shearlock | 1 | 7.167 | 0° |
| 55324-103 | 1u. Shearlock | 1 | 7.333 | 45° |
| 55324-105 | 1u. Shearlock | 1 | 7.500 | 90° |
| 55325-003 | 3/4p Feed Screw | 2 | 10.5 | |
| 55325-103 | 3/4p Feed Screw | 1 | 11.5 | |
| 55324-101 | 1u. Shearlock | 1 | 11.667 | 0° |
| 55324-103 | 1u. Shearlock | 1 | 11.833 | 45° |
| 55324-105 | 1u. Shearlock | 1 | 12.0 | 90° |
| 55325-003 | 3/4p Feed Screw | 7 | 22.5 | |
| 55324-101 | 1u. Shearlock | 1 | 23.667 | 0° |
| 55324-103 | 1u. Shearlock | 1 | 23.833 | 45° |
| 55324-105 | 1u. Shearlock | 1 | 23.0 | 90° |
| 55324-103 | 1u. Shearlock | 1 | 23.167 | 135° |
| 55324-101 | 1u. Shearlock | 1 | 23.333 | 180° |
| 55324-103 | 1u. Shearlock | 1 | 23.5 | 225° |
| 55321-005 | 3/4p Un-cut Cone | 1 | 25 | |

The batch of dry ingredients was metered continuously into the extruder at a rate of 68.0 kg/hr. Immediately after the batch entered the extruder, water was added at a rate of 8.0 kg/hr, and vegetable oil was added at a rate of 1.1 kg/hr. To ensure that the extrudate was exposed to as little shear as possible, the screws were rotated at 350 rpm. During the conveyance through the extruder, the dough reached a temperature of 99°C, and the die pressure was 750 psi. The SME experienced by the ingredients while in the extruder was 0.06 kW/kg/hr.

After exiting the extruder, the dough was cut by a rotary knife, then dried and milled. For the drying process, the cut extrudate was conveyed through a Wenger Series IV Model 4800 gas-fired, two-pass belt dryer with an inlet air temperature of 87.8°C and a residence time of 20 minutes. After the extrudate had dried, it was milled using a Quadro brand Comil Model 197 cone mill, operating at 1,800 RPM, with impeller number 1607, screen 079G. Table 8 lists the preferred particle size distribution.

Table 8

| SIEVE | % RETAINED[A] |
|-------|-----------|
| USS 20 | 5.2% |
| USS 40 | 23.1% |
| USS 60 | 21.8% |
| USS 80 | 11.7% |
| Pan | 38.2% |
| [A] Based upon the total percent retained taken as 100%. | |

Next, the particles were fed into a coating system and enrober reel where they were sprayed with the mixture set forth in Table 9 to impart flavoring in, and texture on, the particles.

Table 9

| INGREDIENT | % BY WT.[A] |
|------------|----------|
| Water | 32.0% |
| Sugar | 50.0% |
| Natural Banana Flavoring | 10.0% |
| Vitamin Pre-mix | 8.0% |
| [A] Using 2% by weight of the milled particles as the basis for the percentages by weight. | |

The milled particles were then subjected to particle addition (either within or outside of the enrober reel) of 1% by weight drum dried banana flakes, based upon the total weight of the milled particles taken as 100%. Finally, the particles were surface-coated with 1.6% by weight high oleic canola oil, based upon the total weight of the milled particles taken as 100%.

After enrobing, particle addition, and oil surface coating, the final product was analyzed for reconstituted texture by adding 10 g of product to 30 g ambient water in a 100 ml beaker. This mixture was stirred approximately 20 revolutions and then allowed to set for 1 minute. The resulting texture resembled the consistency of mashed potatoes.

EXAMPLE 4

Viscosity Measurements of Wheat-Based Cereal

To quantitatively determine the texture and quality of the cereal product created in Example 3, absolute viscosity was measured. First, the cereal product was rehydrated by mixing 40 g of the dry milled cereal from Example 3 with 180 g of water at ambient temperature in a 250 ml beaker until dissolved. Using a Brookfield R/S Rheometer, Vane Spindle V40 mm-20mm, and Rheo V2.7 Software, measurements for absolute viscosity were obtained as shown in Fig. 2.

For comparison, the absolute viscosity of a commercially available, drum dried wheat cereal and extruded wheat cereal with only native flour, both in rehydrated form, were measured. The extruded wheat cereal with native wheat flour was produced by following the procedure from Example 3, but using the following dry ingredients set forth below in Table 10.

Table 10

| INGREDIENTS | % BY WT.[A] |
|-------------|----------|
| Native Whole Wheat Flour | 75.65% |

(continued)

| INGREDIENTS | % BY WT.[A] |
|---|---|
| 52 Ash Soft Wheat Flour | 5.75% |
| Sugar | 14.12% |
| Dicalcium Phosphate | 4.14% |
| Tricalcium Phosphate | 0.13% |
| Ferrous Fumarate | 0.18% |
| Zinc Sulfate Monohydrate | 0.03% |
| [A] Based upon the total weight of all ingredients other than water taken as 100% by weight. | |

By comparing the peak viscosities of the extruded cereal with pre-gelatinized flour to that of the traditional drum dried cereal, Fig. 2 shows that the texture of the extruded cereal with pre-gelatinized flour is comparable to the texture of the traditional drum dried cereal. In contrast, the extruded cereal with native flour had a peak viscosity seven times that of the other two cereal products.

EXAMPLE 5

Enthalpy (ΔH) Measurements

1. Rice-Based Cereal

Cereal compositions comprising long grain, white rice flour were formed. Each composition comprised 97.50% by weight total (native and pre-gelled) rice flour, 2.00% by weight mineral pre-mix, and 0.50% by weight canola oil, similar to the composition of Example 1. However, the ratio of pre-gelled to native flour in each composition was varied as shown in Table 11.

Next, 20 mg of cereal composition was placed in a 7-mm diameter pan, and 40 mg of water were added to the pan. The pan was sealed, and the sample was held at room temperature for 2 hours prior to enthalpy measurements on a Differential Scanning Calorimeter (DSC 7, Perkin Elmer). The run parameters for the DSC were as follows: hold for 1.0 minute at 25 °C and heat from 25 °C to 98 °C at a ramp rate of 5.00°C/minute.

The ΔH (J/g) for each sample was measured by calculating the area under the endotherm peak using Pyris software (Perkin Elmer). These results are set forth in Table 11.

Table 11 - ΔH for Rice-Based Cereal

| % PRE-GELLED FLOUR[A] | ΔH (J/g) | % REDUCTION[B] IN ΔH |
|---|---|---|
| 0 (control) | 9.505 | 0 |
| 10 | 9.025 | 5 |
| 25 | 8.305 | 13 |
| 50 | 7.105 | 25 |
| 71 | 6.107 | 36 |
| 75 | 5.905 | 38 |
| 100 | 4.705 | 50 |
| [A] Based upon the total weight of all flours (native and pre-gelled) present in the composition. [B] As compared to the control sample. | | |

*2. Wheat-Based Cereal*

Cereal compositions comprising soft whole wheat flour were formed. Each composition comprised 82.12% by weight total (native and pre-gelled) wheat flour, 15.86% by weight sugar, 0.32% by weight tricalcium phosphate, 0.20% by weight dicalcium phosphate, and 1.50% by weight canola oil, similar to the composition of Example 3. However, the ratio of pre-gelled to native flour in each composition was varied as shown in Table 12.

Next, 20 mg of cereal composition was placed in a 7-mm diameter pan, and 40 mg of water were added to the pan. The pan was sealed, and the sample was held at room temperature for 2 hours prior to enthalpy measurements on a Differential Scanning Calorimeter (DSC 7, Perkin Elmer). The run parameters for the DSC were as follows: hold for 1.0 minute at 25 °C and heat from 25 °C to 98 °C at a ramp rate of 5.00°C/minute.

The ΔH (J/g) for each sample was measured by calculating the area under the endotherm peak using Pyris software (Perkin Elmer). These results are set forth in Table 12.

Table 12 - ΔH for Wheat-Based Cereal

| % PRE-GELLED FLOUR[A] | ΔH (J/g) | % REDUCTION[B] IN ΔH |
|---|---|---|
| 0 (control) | 5.160 | 0 |
| 10 | 4.790 | 7 |
| 25 | 4.235 | 18 |
| 50 | 3.310 | 36 |
| 75 | 2.385 | 54 |
| 93 | 1.719 | 67 |
| 100 | 1.460 | 72 |

[A] Based upon the total weight of all flours (native and pre-gelled) present in the composition.
[B] As compared to the control sample.

*3. Discussion*

As shown in Tables 11 and 12, the ΔH of a composition decreases as the ratio of pre-gelled starch/flour to native starch/flour is increased. Thus, the higher the concentration of pre-gelled starch, the lower the ΔH.

In accordance with the invention, it is preferred that the inventive subject composition comprise sufficient pre-gelled starch and/or flour that the ΔH of the subject composition is reduced by at least about 5%, preferably at least about 20%, more preferably at least about 30%, even more preferably at least about 35%, and yet even more preferably from about 40% to about 80%, relative to the ΔH of a control composition. "Control composition" refers to a composition comprising the same ingredients and in the same quantities as the subject composition except that the control composition includes only native flours and starches (i.e., zero pre-gelled flours and starches). Furthermore, the native flour or starch is of the same type (e.g., hard vs. soft, long grain vs. short grain, whole wheat vs. refined wheat) as the type of the pre-gelled flour or starch in the subject composition. Parts 1 and 2 of this Example 5 provide a sample of how to determine this property.

**Claims**

**1.**   A method of forming a cereal, said method comprising the steps of:

introducing ingredients into the barrel of an extruder equipped with at least one flighted, axially rotatable screw and an outlet, said ingredients comprising:

water; and
a component selected from the group consisting of pre-gelatinized starches and pre-gelatinized flours; and

rotating said screw at a speed of less than about 500 rpm to advance said ingredients along the length of said barrel and through said outlet to yield an extrudate.

2. The method of claim 1, wherein said extruder is equipped with two rotatable screws, and said rotating step comprising the step of rotating both rotatable screws to effect said advancement of said ingredients.

3. The method of claim 1, wherein said screw is rotated at a rate of less than about 450 rpm.

4. The method of claim 1, wherein said ingredients obtain a temperature of from about 21 °C to about 260°C in said extruder barrel.

5. The method of claim 1, wherein said ingredients are advanced through said extruder barrel at a rate of from about 40 to about 140 lbs/hr.

6. The method of claim 1, wherein said ingredients are retained in said extruder barrel for a time period of from about 9 to about 17 seconds.

7. The method of claim 1, wherein said ingredients experience a specific mechanical energy in said extruder barrel of less than about 0.100 kW/kg/hr.

8. The method of claim 1, said ingredients further comprising an oil.

9. The method of claim 1, wherein said ingredients further comprise an ingredient selected from the group consisting of native starches and native flours.

10. The method of claim 1, wherein said component is selected from the group consisting of rice, wheat, oat, and barley flours.

11. The method of claim 1, wherein said outlet comprises an extrusion die and said rotating step comprises advancing said ingredients through said extrusion die.

12. The method of claim 1, further comprising the step of subjecting an ingredient selected from the group consisting of starches and flours to a preconditioning step to form the pre-gelatinized starch or pre-gelatinized flour prior said introducing step.

13. The method of claim 1, further comprising the step of drying said extrudate after said rotating step.

14. The method of claim 13, wherein said drying step comprises exposing said extrudate to air having a temperature of from about 70 to about 100°C for a time period of from about 5 to about 35 minutes.

15. The method of claim 13, further comprising the step of milling said extrudate after, before, or during said drying step to produce cereal particles.

16. The method of claim 15, wherein at least about 90% of said cereal particles will pass through a USS 8.

17. The method of claim 15, further comprising the step of contacting said particles with a coating composition.

18. The method of claim 13, wherein said dried extrudate can be rehydrated by adding water at a weight ratio of water: dried extrudate of from about 2:1 to about 6:1.

19. The method of claim 18, wherein said flowable mixture has a viscosity of from about 20 Pa•s to about 700 Pa•s.

20. A composition useful for forming food products, said composition comprising a mixture of:

water; and
at least about 10% by weight of a component selected from the group consisting of pre-gelatinized starches and pre-gelatinized flours, said percentage by weight being based upon the total weight of the composition taken as 100% by weight.

21. The composition of claim 20, wherein said composition comprises from about 30-90% by weight of said component, based upon the total weight of the composition taken as 100% by weight.

**22.** The composition of claim 20, said mixture further comprising an oil.

**23.** The composition of claim 20, wherein said mixture further comprises an ingredient selected from the group consisting of native starches and native flours.

**24.** The composition of claim 20, wherein said component is selected from the group consisting of rice, wheat, oat, and barley flours.

**25.** The composition of claim 20, wherein said composition has a ΔH, and said ΔH is reduced by at least about 5% relative to the ΔH of a control composition.

**26.** A composition useful for forming food products, said composition comprising a mixture of:

at least about 10% by weight of a component selected from the group consisting of pre-gelatinized starches and pre-gelatinized flours; and
from about 0.1% to about 10% by weight of an oil, said composition having a moisture content of from about 5% to about 50% by weight, said percentages by weight being based upon the total weight of the composition taken as 100% by weight.

**27.** The composition of claim 26, said composition further comprising an ingredient selected from the group consisting of native starches and native flours.

**28.** The composition of claim 27, wherein said ingredient is present at a level of from about 0.1% to about 60% by weight, based upon the total weight of the composition taken as 100% by weight.

**29.** The composition of claim 26, wherein said composition further comprises a further ingredient selected from the group consisting of sugar, vitamin supplements, mineral supplements, flavoring agents, coloring agents, and mixtures of the foregoing.

**30.** The composition of claim 26, wherein said composition has a ΔH, and said ΔH is reduced by at least about 5% relative to the ΔH of a control composition.

**31.** A composition useful for forming food products, said composition having a ΔH and comprising a mixture of:

water; and
sufficient quantities of a component selected from the group consisting of pre-gelatinized starches and pre-gelatinized flours such that the ΔH of said composition is reduced by at least about 5% relative to the ΔH of a control composition.

**32.** The composition of claim 31, wherein said ΔH of said composition is reduced by at least about 20% relative to the control composition.

**33.** The composition of claim 31, said mixture further comprising an oil.

**34.** The composition of claim 31, wherein said mixture further comprises an ingredient selected from the group consisting of native starches and native flours.

**35.** The composition of claim 31, wherein said component is selected from the group consisting of rice, wheat, oat, and barley flours.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 6045851 A, Cross